# FASCICULE DE BREVET EUROPEEN

(11) **EP 0 967 094 B1**
(45) Date de publication et mention de la délivrance du brevet: **12.03.2003**
(21) Numéro de dépôt: 99111413.3
(22) Date de dépôt: 11.06.1999
(51) Int. Cl.: B60C 13/00, B60C 13/02, B60C 19/00, B60B 7/00

(54) **Ensemble monté pneumatique/roue comportant un enjoliveur**
Luftreifen/Rad Zusammenbau mit einer Zierabdeckung
Tyre/wheel mounted assembly comprising a wheel cover

(30) Priorité: 25.06.1998 FR 9808112
(43) Date de publication de la demande: 29.12.1999
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: Leynaert, Sylvain, 63720 Entraigues (FR)
(74) Mandataire: Diernaz, Christian

(56) Documents cités:
- US-A- 2 963 326
- US-A- 3 012 821
- PATENT ABSTRACTS OF JAPAN vol. 014, no. 203 (M-0966), 25 avril 1990 (1990-04-25) & JP 02 041901 A (KANTO SEIKI CO LTD), 13 février 1990 (1990-02-13)

## Description

L'invention concerne le domaine des ensembles composés d'un pneumatique monté sur une roue et destiné à être montés sur un véhicule, et en particulier ceux des ensembles comportant une partie formant enjoliveur de roue plus particulièrement destiné à masquer ladite roue et à présenter une surface de paroi visuellement plus attractive et esthétique que la roue.

La prise en compte de l'esthétique et de l'aspect purement ornemental dans l'élaboration d'un ensemble pneumatique monté sur une roue pour les véhicules conçus aujourd'hui prend une importance de plus en plus grande. Les concepteurs desdits ensembles sont parfois conduits à créer des motifs décoratifs qui occupent à la fois la surface extérieure du pneumatique (plus particulièrement sur la partie flanc qui s'étend entre la bande de roulement et la partie du pneumatique en contact avec la roue) et la surface de l'enjoliveur équipant la roue sur laquelle est monté le pneumatique.

Dans ce cadre, il peut être très intéressant sur le plan décoratif de créer un motif qui présente une unité d'ensemble à la fois sur la surface visible de l'enjoliveur et sur la surface externe visible du pneumatique. Par motif présentant une unité d'ensemble, on entend un motif qui ne présente pas de discontinuité visuelle apparente entre la surface d'un flanc décoré et la surface visible de l'enjoliveur situé du côté du flanc décoré.

Un tel motif peut être appliqué sur un ensemble décrit dans JP 02 041 901A.

Dans le cas d'un motif présentant une unité d'ensemble, un premier problème se pose après le montage du pneumatique sur sa roue au moment de la mise en place de l'enjoliveur : il est parfois délicat de positionner correctement l'enjoliveur par rapport au motif du pneumatique de façon à retrouver le motif sans discontinuité entre la partie dudit motif présente sur le flanc et celle présente sur l'enjoliveur; cela est d'autant plus vrai que ledit motif n'est pas nécessairement répétitif dans le sens circonférentiel et qu'il est alors impératif de mettre en parfaite correspondance lesdites deux parties pour retrouver le motif décoratif voulu.

En outre, on constate souvent, après roulage de l'ensemble pneumatique/roue monté sur un véhicule, que le pneumatique a légèrement tourné sur sa roue sous l'effet des efforts exercés par le sol sur ledit pneumatique et résultant des accélérations et/ou des freinages répétés du véhicule; cette rotation du pneumatique par rapport à sa roue, qui n'affecte en rien le fonctionnement de l'ensemble monté, conduit cependant à une rupture de la continuité du motif décoratif initial entre l'enjoliveur et le flanc du pneumatique.

Pour résoudre ces problèmes, l'invention propose un ensemble monté destiné à équiper un véhicule et constitué d'une roue de montage et d'un pneumatique pourvu de flancs assurant la liaison entre une bande de roulement et des parties dudit pneumatique prévues pour venir en contact avec ladite roue après montage du pneumatique sur ladite roue de montage. Cet ensemble monté comprend également un élément formant un enjoliveur de roue fixé à la roue de manière à empêcher tout mouvement de l'un par rapport à l'autre dans la direction axiale de l'ensemble monté tout en autorisant une rotation dudit enjoliveur par rapport à ladite roue.

L'ensemble monté est caractérisé en ce que des moyens de liaison entre l'enjoliveur et l'un des flancs sont prévus de manière à ce que ledit flanc coopère avec l'enjoliveur pour assurer à la fois une bonne position angulaire de l'enjoliveur par rapport audit flanc et conserver ladite position pendant l'usage de l'ensemble monté sur un véhicule.

De cette façon, d'éventuels mouvements de rotation du pneumatique par rapport à sa roue de montage, pendant le roulage d'un véhicule équipé dudit ensemble, sont transmis intégralement à l'enjoliveur qui est lié audit pneumatique. Ainsi les problèmes évoqués plus haut sont dès lors résolus puisque les moyens de l'invention permettent de mettre aisément en concordance les motifs décoratifs réalisés sur l'enjoliveur et sur l'un des flancs d'un pneumatique et aussi de conserver ladite concordance pendant le roulage.

Dans un premier mode de réalisation, l'ensemble monté selon l'invention est caractérisé en ce que l'enjoliveur comporte au moins une extension se prolongeant radialement jusque sur l'un des flancs du pneumatique, chaque extension ayant une élasticité de déformation appropriée pour suivre les déformations du flanc pendant le roulage et en ce que des moyens de liaison sont prévus sur ledit flanc pour assurer et conserver la position angulaire de l'enjoliveur par rapport audit flanc.

Dans un deuxième mode de réalisation d'un ensemble monté selon l'invention, l'un au moins des flancs du pneumatique comporte au moins un prolongement s'étendant radialement vers l'axe de rotation du pneumatique pour coopérer avec des logements prévus sur l'enjoliveur, afin d'assurer et conserver la position angulaire de l'enjoliveur par rapport audit flanc.

L'invention sera mieux comprise à la lecture de la description associée aux figures dont le but est de présenter de manière non limitative des variantes de réalisation et selon lesquelles :
La figure **1** montre un ensemble monté formé d'un pneumatique monté sur sa roue de montage et d'un enjoliveur comportant une extension radiale sous la forme d'une couronne s'étendant radialement jusqu'à environ la moitié de la hauteur de l'un des flancs d'un pneumatique;
La figure **2** montre une coupe transversale selon A-A de l'ensemble monté représenté à la figure **1**;
La figure **3** montre une coupe transversale d'une variante d'un ensemble monté selon l'invention comportant un orifice prévu pour laisser passer une protubérance de gomme moulée sur un flanc;
La figure **4** montre une coupe transversale d'une variante d'un ensemble monté selon l'invention dans lequel l'un des flancs comporte des prolongements s'étendant radialement vers l'intérieur pour coopérer avec un enjoliveur.

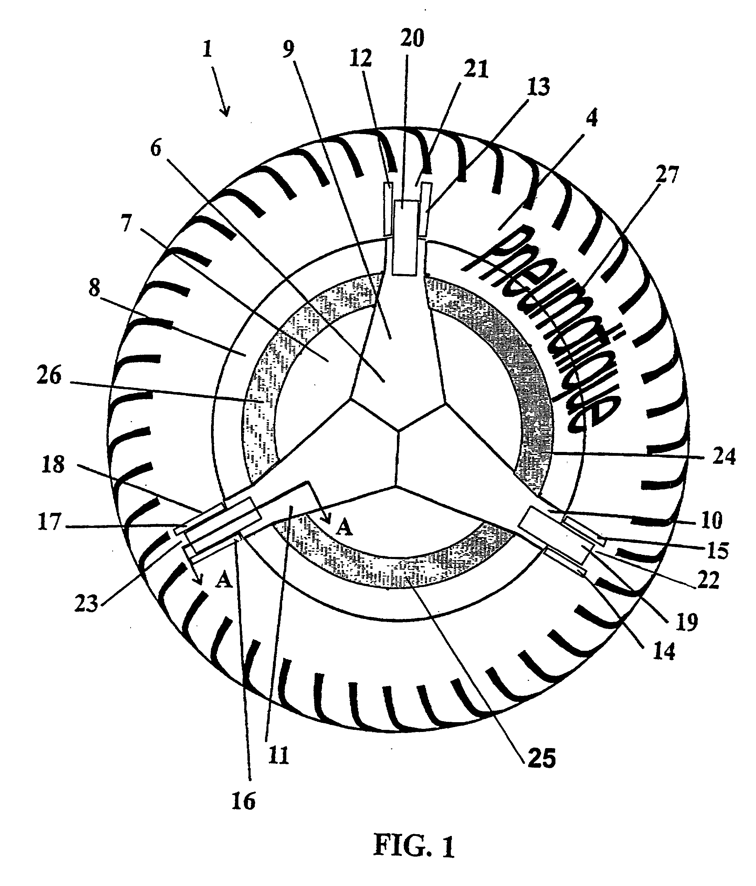

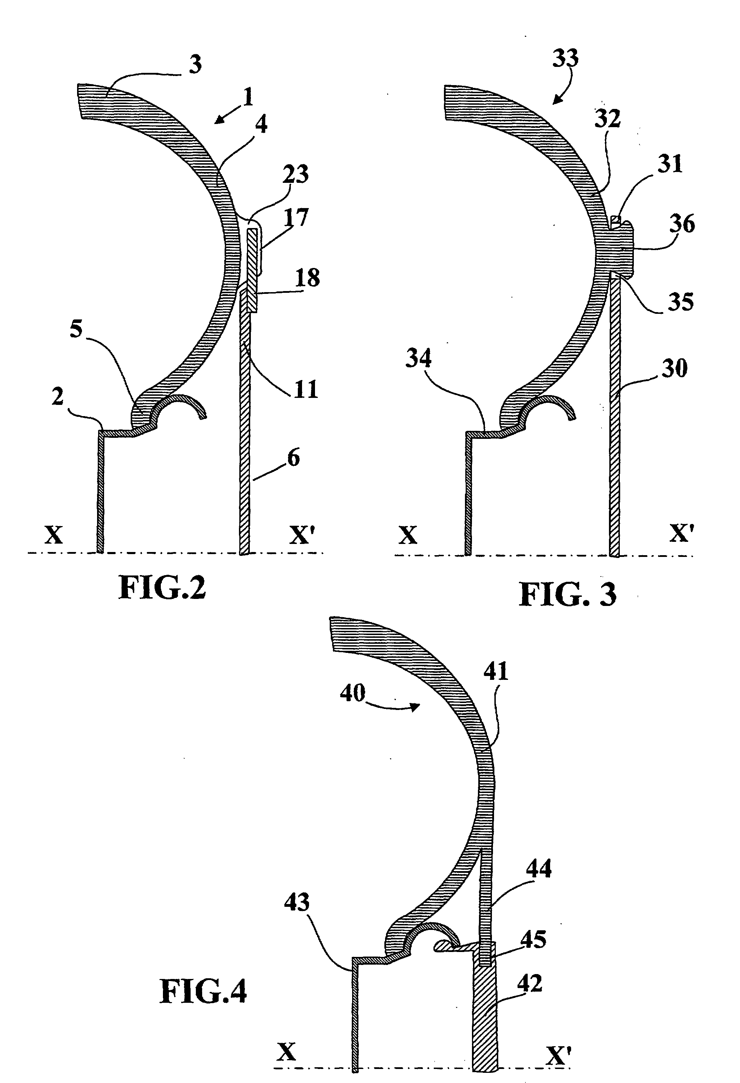

La figure **1** montre un ensemble monté comportant un pneumatique **1** monté et gonflé sur sa roue de montage **2** visible sur la coupe selon A-A représentée à la figure **2**. Le pneumatique **1** comprend une bande de roulement **3** prolongée à ses extrémités axiales par des flancs **4**, chaque flanc se terminant au niveau de la roue de montage **2** par des parties **5** formant les bourrelets du pneumatique (visibles sur la figure **2**) et destinées à assurer le contact avec ladite roue, une fois le pneumatique monté sur sa roue de montage.

Un enjoliveur **6** est mis en place sur la roue et est maintenu axialement par rapport à ladite roue par des moyens usuels, non représentés, de manière à pouvoir tourner librement autour d'un axe qui se confond avec l'axe de rotation XX' de ladite roue. Cet enjoliveur **6** comporte, à la périphérie d'une partie centrale en forme de disque **7** masquant en grande partie la roue, une couronne **8** reliée à ladite partie centrale **7** par trois branches **9**, **10**, **11**. La couronne **8** s'étend radialement au delà de la roue et recouvre en partie l'un des flancs **4** du pneumatique.

La couronne **8** de l'enjoliveur **6** est prolongée radialement par trois pattes **18**, **19**, **20** coulissantes dans la direction radiale (c'est-à-dire sensiblement perpendiculaire l'axe de rotation de l'ensemble monté) par rapport à ladite couronne et formant des extensions radiales pouvant s'étendre jusqu'à environ la moitié de la hauteur de l'un des flancs.

Par hauteur d'un flanc, on entend la distance radiale séparant l'extrémité de la bande de roulement du pneumatique le plus à l'extérieur axialement et la partie du flanc la plus proche de la roue de montage lorsque le pneumatique est monté sur ladite roue.

Sur le flanc **4** du pneumatique, trois paires de nervures (**12**, **13**), (**14**, **15**), (**16**, **17**) orientées sensiblement radialement sont moulées au moment de la fabrication dudit pneumatique. Chaque paire de nervures délimite un espace servant de logement **21**, **22**, **23** à une extension radiale de l'enjoliveur **6**. Les trois paires de nervures sont disposées sur le flanc de manière à ce que chaque paire soit à environ **120°** par rapport aux deux autres.

Après avoir procédé au montage du pneumatique sur sa roue et installé l'enjoliveur, on procède à l'ajustement de la position angulaire dudit enjoliveur par rapport au pneumatique en le faisant tourner jusqu'à la position voulue, puis on verrouille l'enjoliveur **6** dans cette position en faisant coulisser les pattes coulissantes **18**, **19**, **20** dans les espaces **21**, **22**, **23**. Ainsi qu'il est représenté, il est possible de mettre en coïncidence les motifs décoratifs dessinés sur l'un des flancs **4** et sur la couronne **8** de l'enjoliveur **6** de manière à reconstituer un motif d'ensemble **27** formant, à titre d'exemple, le mot "Pneumatique".

En outre, des moyens, non représentés ici, peuvent être prévus pour bloquer lesdites pattes dans cette position afin d'empêcher leur déplacement radial hors de leurs logements.

On distingue également sur la figure **1** trois fenêtres **24, 25, 26** formées sur l'enjoliveur **6** et séparant le disque **7** de la couronne **8** dudit enjoliveur; une de ces fenêtres est prévue pour permettre l'accès à une valve de gonflage du pneumatique. Toutefois, il est pas indispensable de prévoir ces fenêtres, puisqu'il suffit pour modifier la pression de gonflage du pneumatique d'ôter l'enjoliveur afin d'accéder à la valve avant de remettre en place ledit enjoliveur dans la bonne position.

Sur la figure **2**, on a représenté la coupe transversale partielle selon A-A de l'ensemble monté de la figure **1** (coupe contenant l'axe de rotation de l'ensemble monté); sur cette coupe schématique, on distingue une branche **11** de l'enjoliveur **6** prolongée radialement par une patte coulissante **18** qui est insérée entre les deux nervures **16, 17** orientées sensiblement radialement, lesdites nervures coopérant avec la patte **18** pour empêcher quasiment tout déplacement relatif dudit enjoliveur par rapport au pneumatique **1** dans la direction circonférentielle et de façon à maintenir la concordance des motifs décoratifs réalisés sur ledit enjoliveur et ledit pneumatique.

Chaque nervure **16**, **17** peut être réalisée au moyen d'une série de petites protubérances alignées dans une même direction et moulées à la surface d'au moins un flanc.

Une variante de la disposition qui vient d'être présentée consiste à réaliser sur au moins un flanc du pneumatique au moins une rainure (en creux) orientée dans une direction sensiblement radiale. Par orientation sensiblement radiale, on entend que l'orientation moyenne de la rainure est telle que ses bords empêchent quasiment tout déplacement circonférentiel d'une extension radiale de l'enjoliveur, une fois cette extension en place dans le logement formé par ladite rainure.

Il est également possible de prévoir sur l'enjoliveur au moins un nombre d'extensions radiales égal au nombre de logements prévus sur l'un des flancs, chaque extension n'étant pas coulissante radialement par rapport audit enjoliveur mais pouvant venir se loger dans un logement prévu sur l'un des flancs du pneumatique au moment du montage de l'enjoliveur sur la roue portant le pneumatique.

Pendant le roulage, le pneumatique subissant, dans la partie en contact avec le sol, des déformations de flexion plus ou moins importantes, il est préférable que l'enjoliveur ait des caractéristiques de souplesse appropriées pour suivre aisément lesdites déformations. Un moyen d'y parvenir est d'employer pour la fabrication de l'enjoliveur un matériau souple comme, par exemple, du caoutchouc. Rappelons que l'enjoliveur étant lié à la roue dans le sens axial, il ne peut être éjecté de l'ensemble monté pendant le roulage.

Une autre variante de liaison entre un enjoliveur et un pneumatique est montrée à la figure **3**. Sur cette figure est représentée une coupe transversale schématique d'un ensemble monté composé d'un pneumatique monté sur une roue (le plan de coupe contient l'axe de rotation de l'ensemble monté). On voit sur cette figure une partie seulement d'un enjoliveur **30** comportant une extension radiale **31** sous la forme d'une couronne qui s'étend jusque sur un flanc **32** d'un pneumatique **33** et recouvre la totalité de la partie dudit flanc située entre la roue de montage **34** et les points du flanc situés axialement le plus à l'extérieur du pneumatique. L'extension **31** comporte un orifice formant une lumière **35** traversée par au moins une protubérance de gomme **36** moulée (ou collée) sur la surface externe du flanc **32** de façon à permettre un ajustement relatif de la position de l'enjoliveur **30** par rapport audit flanc et à assurer une liaison mécanique obligeant ledit enjoliveur à suivre le pneumatique dans ses éventuels mouvements de rotation par rapport à sa roue **34** sous l'action des efforts exercés par le sol dans le cas d'accélération et/ou de freinage ainsi que dans les mouvements de flexion du flanc pendant le roulage de l'ensemble monté équipant un véhicule.

De manière à permettre un mouvement relatif entre l'enjoliveur **30** et le pneumatique **33** dans une direction voisine de la direction radiale en particulier lorsque ledit pneumatique est écrasé, il est préférable de prévoir que la protubérance de gomme **36** est uniquement en contact avec les parois latérales de chaque orifice **35** de l'enjoliveur (c'est-à-dire les parois espacées dans la direction circonférentielle). De cette façon, la protubérance de gomme **36** sur le flanc peut se déplacer sans aucun dommage à l'intérieur de l'orifice **35** sous l'effet de l'écrasement du pneumatique

La figure 4 montre, en coupe transversale, une autre variante d'ensemble monté selon l'invention et selon laquelle l'un des flancs **41** d'un pneumatique **40** est pourvu d'au moins un prolongement de gomme **44** s'étendant vers les plus petits rayons et recouvrant au moins partiellement la partie de la roue formant crochet de roue en contact avec le pneumatique. Chaque prolongement **44** de flanc coopère avec des moyens prévus sur l'enjoliveur **42** pour assurer le bon positionnement de l'enjoliveur par rapport au pneumatique et pour conserver ladite configuration pendant l'utilisation de l'ensemble monté sur un véhicule en roulage.

Le montage d'un tel ensemble se fait en montant tout d'abord le pneumatique sur sa roue de montage avec chaque prolongement de flanc passant par dessus le crochet de roue; après gonflage du pneumatique, on procède ensuite à la mise en place de l'enjoliveur sur la roue de montage en soulevant chaque prolongement de flanc **44** puis on insère chacun desdits prolongements dans un logement **45** prévu sur l'enjoliveur.

Pour obtenir une meilleure liaison, dans le sens circonférentiel, entre l'enjoliveur et le pneumatique, il peut être prévu de coller les parties de flancs et les parties d'enjoliveur en contact.

Selon cette dernière variante, il est également possible d'envisager le cas d'un flanc ayant un prolongement formant une couronne, ladite couronne étant, par exemple, collée à un enjoliveur lui-même fixé axialement à la roue.

Avantageusement, un motif décoratif unitaire peut être réalisé après assemblage des différentes parties (pneumatique-roue-enjoliveur) constitutives de l'ensemble monté, puisqu'ainsi la continuité est nécessairement obtenue et qu'en outre les caractéristiques de l'invention assurent la stabilité de ce motif pendant le roulage.

## Revendications

1. Ensemble destiné à équiper un véhicule et constitué d'une roue de montage (**2, 34, 43**) et d'un pneumatique (**1**, **33**, **40**) pourvu de flancs (**4**, **32**, **41**) assurant la liaison entre une bande de roulement et des parties dudit pneumatique prévues pour venir en contact avec ladite roue de montage après montage du pneumatique sur sa roue, ledit ensemble comprenant en outre un élément formant un enjoliveur (**6**, **30**, **42**) de roue fixé axialement à la roue et monté libre en rotation par rapport à ladite roue, l'ensemble étant **caractérisé en ce que** l'un des flancs coopère avec l'enjoliveur pour assurer à la fois une position angulaire prédeterminée de l'enjoliveur par rapport audit flanc et conserver ladite position pendant l'usage dudit ensemble.

2. Ensemble selon la revendication **1 caractérisé en ce que** l'enjoliveur (**6**, **30**) comporte au moins une extension (**9**, **31**) se prolongeant radialement jusque sur l'un des flancs (**4**, **32**) du pneumatique, chaque extension (**9**, **31**) ayant une élasticité de déformation appropriée pour suivre les déformations du flanc (**4**, **32**) pendant le roulage et **en ce que** des moyens sont prévus sur ledit flanc pour assurer et conserver la position angulaire de l'enjoliveur par rapport audit flanc.

3. Ensemble selon la revendication **2 caractérisé en ce qu'**au moins une rainure (**21**) orientée dans une direction différente de la direction circonférentielle, est moulée sur l'extérieur d'au moins un flanc du pneumatique pour coopérer avec une extension radiale de l'enjoliveur (**31**) et rendre solidaires le pneumatique et l'enjoliveur dans la direction circonférentielle.

4. Ensemble selon la revendication **2 caractérisé en ce que** le pneumatique comporte, sur l'extérieur d'au moins un de ses flanc, au moins deux protubérances (**12**, **1**3) espacées dans la direction circonférentielle de façon à constituer un espace destiné à recevoir une extension radiale de l'enjoliveur.

5. Ensemble selon la revendication **3** ou la revendication **4 caractérisé en ce que** au moins une patte coulissante (**18**, **19**, **20**) est prévue sur l'enjoliveur (**6**), ladite patte pouvant coulisser vers les plus grands rayons pour venir se placer dans un logement (**21**, **22**, **23**) prévu sur le flanc (**4**) du pneumatique afin d'assurer et conserver la position angulaire de l'enjoliveur par rapport audit flanc.

6. Ensemble selon l'une des revendications **2** à **5 caractérisé en ce qu'**au moins une extension (**31**) est pourvue d'au moins un orifice (**35**) destiné à recevoir une protubérance de gomme (**36**) sur la surface externe dudit flanc (**32**).

7. Ensemble selon la revendication **1 caractérisé en ce que** l'un au moins des flancs du pneumatique comporte au moins un prolongement (**44**) s'étendant radialement vers l'axe de rotation XX' du pneumatique, chaque prolongement (**44**) étant prévu pour coopérer avec un logement (**45**) prévu sur l'enjoliveur, afin d'assurer et conserver la position angulaire de l'enjoliveur par rapport audit flanc pendant l'utilisation dudit ensemble sur un véhicule.

8. Ensemble selon l'une quelconque des revendications **1** à **7 caractérisé en ce que** les parties de flanc coopérant avec les parties correspondantes de l'enjoliveur sont collées entre elles.

9. Ensemble selon l'une des revendications **1** à **8 caractérisé en ce que** l'enjoliveur est réalisé en mélange de caoutchouc.

10. Ensemble selon l'une quelconque des revendications **1** à **9 caractérisé en ce qu'**un motif décoratif unitaire (**27**) est obtenu après assemblage des parties (pneumatique-roue-enjoliveur) formant ledit ensemble.

## Claims

1. An assembly intended to be fitted on a vehicle and formed of a mounting wheel (2, 34, 43) and a tyre (1, 33, 40) having sidewalls (4, 32, 41) providing the connection between a tread and the parts of said tyre intended to come in contact with said mounting wheel after mounting of the tyre on its wheel, said assembly furthermore comprising an element forming a wheel hubcap (6, 30, 42) axially fastened to the wheel and mounted freely rotating relative to said wheel, the assembly being **characterised in that** one of the sidewalls cooperates with the hubcap to ensure a predetermined angular position of the hubcap in relation to said sidewall and to maintain said position during the use of said assembly.

2. An assembly according to Claim 1, **characterised in that** the hubcap (6, 30) comprises at least one extension (9, 31) projecting radially to one of the sidewalls (4, 32) of the tyre, each extension (9, 31) having a deformation elasticity suitable for following the deformations of the sidewall (4, 32) during rolling, and **in that** means are provided on said sidewall to secure and preserve the angular position of the hubcap relative to said sidewall.

3. An assembly according to Claim 2, **characterised in that** at least one groove (21), oriented in a direction other than circumferential, is moulded on the outside of at least one sidewall of the tyre in order to cooperate with a radial extension of the hubcap (31) and to integrate the tyre and the hubcap in the circumferential direction.

4. An assembly according to Claim 2, **characterised in that** the tyre comprises at least two protuberances (12, 13) spaced in the circumferential direction on the outside of at least one of its sidewalls to form a space designed to receive a radial extension of the hubcap.

5. An assembly according to Claim 3 or Claim 4, **characterised in that** at least one sliding bracket (18, 19, 20) is provided on the hubcap (6), said bracket being able to slide towards the largest radius to be placed in a seat (21, 22, 23) provided on the sidewall (4) of the tyre, so as to secure and preserve the angular position of the hubcap in relation to said sidewall.

6. An assembly according to one of Claims 2 to 5, **characterised in that** at least one extension is provided with at least one opening (35) to receive a rubber protuberance (36) on the outer surface of said sidewall (32).

7. An assembly according to Claim 1, **characterised in that** at least one of the sidewalls of the tyre comprises at least one extension (44) extending radially towards the axis of rotation XX' of the tyre, each extension (44) being designed to cooperate with a seat (45) provided on the hubcap in order to secure and preserve the angular position of the hubcap in relation to said sidewall during the use of said assembly on a vehicle.

8. An assembly according to any one of Claims 1 to 7, in which the sidewall parts cooperating with the corresponding parts of the hubcap are glued together.

9. An assembly according to one of Claims 1 to 8, **characterised in that** the hubcap is made of a rubber mix.

10. An assembly according to any one of Claims 1 to 9, **characterised in that** a unitary ornamental motif (27) is obtained after assembly of the parts (tyre-wheel-hubcap) forming said assembly.

## Patentansprüche

1. Baugruppe, die dazu bestimmt ist, ein Fahrzeug auszustatten, und von einem Montagerad (2, 34, 43) und einem Reifen (1, 33, 40) gebildet ist, der mit Flanken (4, 32, 41) versehen ist, die die Verbindung zwischen der Lauffläche und den Teilen des genannten Reifens sicherstellen, die dazu vorgesehen sind, nach der Montage des Reifens auf dem Montagerad mit dem genannten Montagerad in Berührung zu gelangen, wobei die montierte Baugruppe außerdem ein Element aufweist, das eine Radkappe bzw. Zierabdeckung (6, 30 , 42) des Rades bildet und bezüglich des genannten Rades drehungsfrei montiert ist, und wobei die Baugruppe **dadurch gekennzeichnet ist, daß** die eine der Flanken mit der Zierabdekkung zusammenwirkt, so daß gleichzeitig eine vorbestimmte Winkellage der Zierabdeckung bezüglich der genannten Flanke sichergestellt wird und die genannte Lage während der Verwendung der montierten Baugruppe beibehalten wird.

2. Baugruppe nach Anspruch 1, **dadurch gekennzeichnet, daß** die Zierabdeckung (6, 30) mindestens eine Verlängerung (9, 31) aufweist, die sich radial bis über eine der Flanken (4, 32) des Reifens verlängert, wobei jede Verlängerung (9, 31) eine geeignete Verformungselastizität aufweist, um den Verformungen der Flanke (4, 32) während der Fahrt zu folgen, und daß auf der genannten Flanke Mittel vorgesehen sind, um die Winkellage der Zierabdeckung in Bezug auf die genannte Flanke sicherzustellen und zu bewahren.

3. Baugruppe nach Anspruch 2, **dadurch gekennzeichnet, daß** mindestens eine Rille (21), die in einer Richtung ausgerichtet ist, die sich von der Umfangsrichtung unterscheidet, auf der Außenseite mindestens einer Flanke des Reifens eingeformt ist, um mit einer radialen Verlängerung der Zierabdeckung (31) zusammenzuwirken und den Reifen und die Zierabdeckung in Umfangsrichtung fest miteinander zu verbinden.

4. Baugruppe nach Anspruch 2, **dadurch gekennzeichnet, daß** der Reifen auf der Außenseite mindestens einer seiner Flanken mindestens zwei Ausstülpungen (12, 13) aufweist, die in Umfangsrichtung derart beabstandet sind, daß sie einen Zwischenraum bilden, der dazu bestimmt ist, eine radiale Verlängerung der Zierabdeckung aufzunehmen.

5. Baugruppe nach Anspruch 3 oder Anspruch 4, **dadurch gekennzeichnet, daß** mindestens eine gleitende bzw. verschiebliche Tatze (18, 19, 20) auf der Zierabdeckung (6) vorgesehen ist, wobei die genannte, verschiebliche Tatze zu den größeren Radien hin gleiten kann, um in einem Sitz (21, 22, 23) aufgenommen zu werden, der auf der Flanke (4) des Reifens vorgesehen ist, um die Winkellage der Zierabdeckung in Bezug auf die genannte Flanke sicherzustellen und zu bewahren.

6. Baugruppe nach einem der Ansprüche 2 bis 5, **dadurch gekennzeichnet, daß** mindestens eine Verlängerung (31) mit mindestens einer Öffnung (35) versehen ist, die dazu bestimmt ist, eine Gummi-Ausstülpung (36) auf der Außenseite der genannten Flanke (32) aufzunehmen.

7. Baugruppe nach Anspruch 1, **dadurch gekennzeichnet, daß** mindestens eine der Flanken des Reifens mindestens eine Verlängerung (44) aufweist, die sich radial zur Drehachse XX' des Reifens hin erstreckt, wobei jede Verlängerung (44) dazu vorgesehen ist, mit einem Sitz (45) zusammenzuwirken, der auf der Zierabdeckung vorgesehen ist, um die Winkellage der Zierabdeckung in Bezug auf die genannte Flanke während der Benutzung der genannten Baugruppe auf einem Fahrzeug sicherzustellen und zu bewahren.

8. Baugruppe nach irgendeinem der Ansprüche 1 bis 7, **dadurch gekennzeichnet, daß** die Teile der Flanke, die mit den entsprechenden Teilen der Zierabdeckung zusammenwirken, miteinander verklebt sind.

9. Baugruppe nach einem der Ansprüche 1 bis 8, **dadurch gekennzeichnet, daß** die Zierabdeckung aus einer Gummimischung hergestellt ist.

10. Baugruppe nach irgendeinem der Ansprüche 1 bis 9, **dadurch gekennzeichnet, daß** ein einheitliches, dekoratives Motiv (27) nach dem Zusammenbau der Teile (Reifen/Rad/Zierabdeckung) erhalten wird, die die genannten Baugruppe bilden.
